# EUROPÄISCHE PATENTSCHRIFT

(11) **EP 2 591 346 B1**
(45) Veröffentlichungstag und Bekanntmachung des Hinweises auf die Patenterteilung: **24.01.2018**
(21) Anmeldenummer: 11729101.3
(22) Anmeldetag: 27.06.2011
(51) Int. Cl.: G01N 27/417, F02D 41/14, F02D 41/28, G01N 27/41, G01N 27/406, G01N 33/00

(54) **VERFAHREN ZUR KORREKTUR DES SENSORSIGNALS EINER LAMBDASONDE**
METHOD OF CORRECTION OF THE SENSOR SIGNAL OF A LAMBDA PROBE
METHODE DE CORRECTION D'UN SIGNAL D'UNE SONDE LAMBDA

(30) Priorität: 07.07.2010 DE 102010031060
(43) Veröffentlichungstag der Anmeldung: 15.05.2013
(73) Patentinhaber: Robert Bosch GmbH, 70442 Stuttgart (DE)
(72) Erfinder: LEHLE, Hartwig, 70469 Stuttgart (DE); REINHARDT, Goetz, 71032 Böblingen (DE); DIEHL, Lothar, 70839 Gerlingen (DE); SEILER, Thomas, 70195 Stuttgart (DE)
(86) Internationale Anmeldenummer: PCT/EP2011/060680
(87) Internationale Veröffentlichungsnummer: WO 2012/004143

(56) Entgegenhaltungen:
- EP-A2- 1 006 353
- DE-A1-102004 042 027
- DE-A1-102007 045 984
- DE-A1-102008 042 549

## Beschreibung

Die vorliegende Erfindung betrifft ein Verfahren zum Betreiben eines Sensorelements, insbesondere einer Breitbandlambdasonde gemäß dem Oberbegriff des Anspruchs 1.

### Stand der Technik

Es sind verschiedene Sensorelemente zur Bestimmung der Konzentration einer Gaskomponente in Gasgemischen bekannt. So werden beispielsweise sogenannte Lambdasonden eingesetzt, um die Luftzahl zu bestimmen, die das Verhältnis von Luft zu Kraftstoff beschreibt. Dieses Verhältnis ist für die Verbrennung des Kraftstoffs in einer Brennkraftmaschine sowie für die Abgasnachbehandlung von entscheidender Bedeutung.

Für die Messung des Restsauerstoffgehalts im Abgas sind im Prinzip Sprungsonden und Breitbandsonden bekannt. Bei einer Sprungsonde wird das Potential einer abgasseitigen Elektrode relativ zu einer sauerstoffbespülten Referenzelektrode gemessen. Eine Sprungsonde kann den Übergang von einem fetten zu einem mageren Gemisch und umgekehrt erkennen. Eine Breitbandlambdasonde kann den Restsauerstoffgehalt im Abgas über einen wesentlich breiteren Bereich, also sowohl im fetten als auch im mageren Bereich, messen. Sie besteht im Wesentlichen aus einer Kombination einer herkömmlichen, als galvanische Zelle wirkenden Konzentrationssonde (Nernst-Sonde) sowie einer Grenzstrom- oder "Pump"-zelle. An die Pumpzelle wird von außen eine Spannung angelegt. Ist die Spannung groß genug, stellt sich ein Grenzstrom ein, der proportional zum Unterschied der Sauerstoffkonzentration auf beiden Seiten der Zelle ist. Polaritätsabhängig werden mit dem Strom Sauerstoffatome transportiert. Durch eine elektronische Regelschaltung wird der Konzentrationssonde von der Pumpzelle immer genau so viel Sauerstoff aus dem Abgas zugeführt, dass der Zustand λ = 1 herrscht. Der jeweilige Pumpstrom, der proportional zum Sauerstoff- oder Fettgasgehalt im Abgas ist, bildet das Ausgangssignal der Breitbandlambdasonde. Die Messung der Konzentration im Messgasraum erfolgt anhand der Bestimmung der Nernstspannung zwischen einer Nernstelektrode im Messgasraum und einer sauerstoffbespülten Referenzelektrode in einem Referenzraum. Um die für den Sauerstoffionentransport erforderliche Betriebstemperatur zu erreichen, ist eine Breitbandlambdasonde mit einer integrierten Heizeinrichtung ausgestattet.

Das Messsignal der Lambdasonde ist sowohl von der Luftkennzahl λ, also dem Verhältnis von Luft zu Kraftstoff im Gemisch, als auch vom herrschenden Absolutdruck abhängig. Mit der Frequenz der Zylinderzündung der Brennkraftmaschine schwankt der Absolutdruck des Abgases um mehrere 100 mbar. Mit jedem Druckpuls wird die in den Messgasraum der Lambdasonde eintransportierte Menge an Mager- oder Fettgaskomponenten kurzzeitig stark erhöht und anschließend wieder stark abgesenkt. Da der Regler des Pumpstroms sehr schnell reagiert, kann er in der Eintransportphase die zusätzlichen Gaskomponenten, die ein Abweichen von der Soll-Konzentration im Hohlraum von λ = 1 darstellen, schnell abpumpen. Deshalb werden in der anschließenden Niederdruckphase weniger Gaskomponenten heraustransportiert, als während der Hochdruckphase eintransportiert wurden. Die auftretenden Oszillationen des Pumpstroms lassen sich durch eine geeignete elektronische Filterung glätten. Insgesamt kommt es jedoch zu einer Verschiebung des mittleren Pumpstroms, der mit einem Verlust einer Kennlinien-Genauigkeit einhergeht.

Ein Ansatz, die hiermit einhergehende Ungenauigkeit zu minimieren, verwendet eine möglichst dichte Ausführung der Diffusionsbarrieren, die das Abgas von dem Messgasraum trennen. Allerdings wird hierdurch die statische Druckabhängigkeit der Lambdasonde erhöht. Eine andere Maßnahme zur Verminderung der Auswirkungen der dynamischen Druckabhängigkeit ist die Verkleinerung des Volumens des Messgasraums im Vergleich mit dem Volumen der Diffusionsbarriere, wie es beispielsweise aus der Offenlegungsschrift DE 10 2004 023 004 A1 hervorgeht. Auch hierdurch lässt sich die Abhängigkeit des Messsignals von den dynamischen Druckschwankungen vermindern. Die Verkleinerung des Messgasraums kann jedoch andere Nachteile mit sich bringen. Wegen des hohen Diffusionswiderstandes des Hohlraums wird der Sauerstoff hierbei nur an der Vorderkante der Elektrode abgepumpt und dadurch die Elektrode lokal überlastet. Dies gilt insbesondere für Vergiftungen durch antransportierte gasförmige Elektrodengifte.

Der Erfindung liegt demgegenüber die Aufgabe zugrunde, ein Verfahren zum Betreiben eines Sensorelements, insbesondere einer Breitbandlambdasonde bereitzustellen, das eine zuverlässige Kompensation der dynamischen Druckabhängigkeit des Pumpstroms erlaubt und damit die Messgenauigkeit des Sensorelements erhöht. Das Verfahren soll auch bei bestehenden Sensorelementen eingesetzt werden können, ohne dass weitere Veränderungen an dem Sensorelement selbst vorgenommen werden müssen.

Diese Aufgabe wird durch ein Verfahren gelöst, wie es Gegenstand des Anspruchs 1 ist. Bevorzugte Ausgestaltungen des erfindungsgemäßen Verfahrens ergeben sich aus den Unteransprüchen.

### Offenbarung der Erfindung

### Vorteile der Erfindung

Das erfindungsgemäße Verfahren ist zum Betreiben eines Sensorelements, insbesondere einer Lambdasonde vorgesehen, die zur Bestimmung der Konzentration einer Gaskomponente in einem Gasgemisch geeignet ist. Die Gaskomponente wird durch Anlegen einer Pumpspannung aus dem Messgasraum entfernt und hieraus wird auf die Konzentration der Gaskomponente in dem Gasgemisch geschlossen. Bei derartigen Sensorelementen kann es sich insbesondere um Breitbandlambdasonden handeln, die nach dem sogenannten Zweizeiler-Prinzip oder nach dem sogenannten Einzeller-Prinzip funktionieren. Gemäß dem Zweizeiler-Prinzip wird die Konzentration der Gaskomponente in dem Messgasraum auf einen vorgebbaren Wert eingeregelt und aus dem dabei gemessenen Pumpstrom auf die Konzentration der Gaskomponente in dem Gasgemisch geschlossen. Bei einem Einzeller ist die Konzentration der Gaskomponente anhand eines Grenzstroms messbar. Das erfindungsgemäße Verfahren ist dadurch gekennzeichnet, dass Oszillationen des Pumpstroms, die durch dynamische Druckschwankungen verursacht werden, für eine Korrektur des Pumpstroms berücksichtigt werden. Dynamische Druckschwankungen, die beispielsweise mit der Frequenz der Zylinderzündung der Brennkraftmaschine entstehen, beeinflussen letztendlich den Pumpstrom und damit das Messsignal des Sensorelements. Der Kern der Erfindung liegt darin, diese durch dynamische Druckschwankungen erzeugten Oszillationen bzw. deren Frequenzanteile zu identifizieren und das Sondensignal entsprechend zu korrigieren. Hierdurch kann die spezifische Mittelwertverschiebung des Pumpstroms, die durch die Druck-Oszillationen verursacht wird, kompensiert werden, wodurch die Messgenauigkeit des Sensorelements deutlich verbessert wird.

Vorzugsweise werden die Oszillationen des Pumpstroms analysiert, um die Frequenzanteile, die durch die dynamischen Druckschwankungen verursacht sind, zu identifizieren. Der Pumpstrom wird um die Frequenzanteile, die durch die dynamischen Druckschwankungen verursacht sind, korrigiert. Diese Frequenzanteile werden im Folgenden auch als Frequenzanteile der Druckschwankungen bezeichnet. Die Identifizierung der Frequenzanteile der Druckschwankungen und deren Kompensation kann mit besonderem Vorteil als eine Funktion einer Software der Betriebselektronik durchgeführt werden. Es sind keine weiteren Anpassungen des Sensorelements selbst erforderlich. Vielmehr kann das erfindungsgemäße Verfahren durch Anpassung oder Ergänzung der Auswertesoftware eines Sensorelements eingesetzt werden, sodass das erfindungsgemäße Verfahren auch bei bestehenden Sensorelementen verwendet werden kann.

Mit besonderem Vorteil wird die Analyse der Oszillationen durch eine Frequenz-Analyse vorgenommen. Die Oszillationen, die durch Schwankungen im Verhältnis von Luft zu Kraftstoff bzw. durch Lambdaschwankungen verursacht werden, weisen eine kleinere Frequenz auf als die Oszillationen, die durch dynamische Druckschwankungen verursacht sind. Aufgrund dieser Unterschiede lassen sich die Lambda-Oszillationen von den Druck-Oszillationen trennen, sodass die Frequenzanteile der Druckschwankungen identifiziert und erfindungsgemäß für eine Korrektur berücksichtigt werden können. In einer besonders bevorzugten Ausführungsform erfolgt die Analyse der Frequenzen durch eine Fourier-Frequenz-Analyse, also einer Zerlegung der Oszillationen in deren verschiedene Sinus- und Cosinusfunktionen, um so die Frequenzanteile zu differenzieren, die zum einen auf die Lambda-Oszillationen und zum anderen auf die dynamischen Druckschwankungs-Oszillationen zurückgehen.

Für die Korrektur des Sondensignals gemäß der Erfindung können die Frequenzanteile, die durch die dynamischen Druckschwankungen verursacht sind, von den Oszillationen des Pumpstroms abgezogen werden, sodass letztendlich nur die Lambda-Oszillationen bei der Auswertung des Messsignals des Sensorelements zum Tragen kommen.

In einer anderen bevorzugten Ausgestaltung des erfindungsgemäßen Verfahrens kann die Korrektur des Sensorsignals mithilfe eines Kennfeldes erfolgen. Die eingangs beschriebene Verschiebung des mittleren Pumpstroms in Folge der durch dynamische Druckänderungen verursachten Oszillationen bzw. Oszillationsanteilen des Pumpstroms wird durch eine sogenannte spezifische Mittelwertverschiebung charakterisiert. Diese spezifische Mittelwertverschiebung hängt sowohl vom Sondentyp als auch von der Frequenz der Druckschwankungen und von dem herrschenden mittleren Druck ab. Die Form und Amplitude der Druckpulse hat auf diese Größe keinen Einfluss. Die spezifische Mittelwertverschiebung kann damit einer aktuellen, betriebspunktabhängigen Kombination aus Amplitude, Frequenz und Formfaktor einer sondentypischen Verschiebung des mittleren Pumpstroms zugeordnet werden. Dieser Zusammenhang kann beispielsweise in Form eines Kennfelds in einer Auswerte- und/oder Steuereinheit hinterlegt werden. Die Verschiebung des mittleren Pumpstroms errechnet sich dann aus der aktuellen, betriebspunktabhängigen Kombination von Druckpulsamplitude und -form sowie aus der aus dem Kennfeld entnommenen spezifischen Mittelwertverschiebung. Anhand dieses Kennfelds kann der gemessene Pumpstrom bzw. das Sensorsignal und der damit verbundene Fehler in der Lambdamessung verschoben bzw. korrigiert werden, um die spezifische Mittelwertverschiebung in Folge der dynamischen Druckabhängigkeit des Pumpstroms zu kompensieren. Es ist möglich, die Amplitude und den Formfaktor der Druckpulse in Abhängigkeit von dem Betriebspunkt zum Beispiel auch mithilfe eines Kennfelds oder in besonders bevorzugter Weise mittels eines dynamischen Druckmodells zu bestimmen. Derartige Druckmodelle sind dem Fachmann beispielsweise in Zusammenhang mit der Kompensation der statischen Druckabhängigkeit des Sondensignals in ähnlicher Weise bekannt. Die Frequenz der Druckpulse kann hierbei beispielsweise aus der Motordrehzahl abgeleitet werden. Zusammenfassend können also die Frequenzanteile der durch dynamische Druckschwankungen verursachten Oszillationen durch wenigstens eine Größe charakterisiert werden, die einer sensorelementtypischen Mittelwertverschiebung des Pumpstroms beispielsweise in Form eines Kennfeldes zugeordnet werden. Anhand dieser Zuordnung kann die Korrektur des Pumpstroms vorgenommen werden. In anderen Ausführungsformen kann der Zusammenhang zwischen den Frequenzanteilen, die durch dynamische Druckschwankungen verursacht werden, und Betriebsgrößen oder Betriebsbedingungen, die messbar oder ableitbar sind, mithilfe eines dynamischen Druckmodells zusammengefasst werden, sodass die durch dynamische Druckschwankungen verursachten Oszillationen des Pumpstroms bzw. dessen druckschwankungsbedingte Frequenzanteile anhand einer oder mehrere Betriebsgrößen ermittelt werden können, um erfindungsgemäß für die Korrektur des Sensorsignals berücksichtigt werden zu können.

Mit Vorteil werden für die Korrektur des Sensorsignals nur solche durch dynamische Druckschwankungen verursachten Frequenzanteile berücksichtigt, deren Frequenzen oberhalb einer vorgebbaren Schwelle liegen. Da bei kleinen Frequenzen die Druckpulse im Betrag klein sind, kann es im Sinne einer vereinfachten Ausführung für das erfindungsgemäße Kompensationsverfahren ausreichend sein, nur die hohen Frequenzen auszuwerten. Insbesondere bei den hohen Frequenzen ist der Beitrag zur Mittelwertverschiebung zum Messsignal besonders relevant. Diese Ausführungsform des erfindungsgemäßen Verfahrens ist weniger aufwendig als die Berücksichtigung aller Frequenzen und kann dennoch die Messgenauigkeit des Sensorelements erheblich verbessern.

In einer besonders bevorzugten Ausführungsform des erfindungsgemäßen Verfahrens werden bei der Analyse der Oszillationen des Pumpstroms ausschließlich niedrige Frequenzen von hohen Frequenzen unterschieden. Niedrige Frequenzen sind bevorzugt solche unterhalb von 25 Hz, hohe Frequenzen sind bevorzugt solche oberhalb von 25 Hz. Diese vereinfachte Frequenzanalyse, beispielsweise in Form einer (Fast-)Fourier-Transformation, ist mit wenig Aufwand durchführbar und erzielt dennoch sehr vorteilhafte Ergebnisse. Hierbei kann beispielsweise das Signal des Sensors durch einen Hochpassfilter geleitet und gleichgerichtet werden. Die gemittelte Amplitude wird dann als Parameter für die Sensorsignal-Korrektur verwendet. Zusätzlich sollte die Verschiebung des mittleren Pumpstroms, die infolge der Druckpulse auftritt, bei dieser Ausführungsform berücksichtigt werden.

Die Form, Amplitude und Frequenz der Druckpulse ändern sich im Vergleich zu ihrer Periodendauer relativ langsam. Auch die Fett-Mager-Oszillationen der Gemischregelung sowie Änderungen der Luftkennzahl aufgrund von Lastwechseln treten typischerweise mit Frequenzen von etwa nur 10 Hz auf. Diese relativ langsamen Änderungen erlauben daher eine hinreichend schnelle Kompensation gemäß der Erfindung in Anpassung an einen neuen Betriebspunkt.

Erfindungsgemäß können auch weitere Störsignale bei der Korrektur des Pumpstroms berücksichtigt werden. Insbesondere kann das Störsignal des Pumpstroms aufgrund des Durchgangs der Abgaskonzentration bein λ = 1 zusätzlich kompensiert werden. Während des Durchgangs der Abgaskonzentration durchs λ = 1 kann beispielsweise aus der Steilheit der Pumpstromänderung anhand eines in der Software hinterlegten Kennfeldes das Störsignal ermittelt und vom gemessenen Pumpstrom subtrahiert werden. Auch das Störsignal des Pumpstroms aufgrund eines Übersprechens der Heizertaktung des Sensorelements kann erfindungsgemäß berücksichtigt werden. Dieses Störsignal kann beispielsweise aus der Heizleistung, den Ansteuersignalen, insbesondere dem Duty-Cycle des Heizers, und dem Heißwiderstand des Heizers sowie gegebenenfalls dem Motorbetriebspunkt, der Abgastemperatur etc. anhand eines in der Software hinterlegten Kennfeldes ermittelt und vom gemessenen Pumpstrom subtrahiert werden. Ein entsprechendes Kennfeld kann in geeigneten Betriebsphasen neu kalibriert werden, indem das ungefilterte und unkompensierte Störsignal des Pumpstroms bei der Heizereinkopplung gemessen und gespeichert wird.

Die Erfindung umfasst weiterhin ein Computerprogramm, das alle Schritte des erfindungsgemäßen Verfahrens ausführt, wenn es auf einem Rechengerät oder einem Steuergerät abläuft. Schließlich umfasst die Erfindung ein Computerprogrammprodukt mit Programmcode, der auf einem maschinenlesbaren Träger gespeichert ist, zur Durchführung des erfindungsgemäßen Verfahrens, wenn das Programm auf einem Computer oder einem Steuergerät ausgeführt wird. Mithilfe des Computerprogramms bzw. des Computerprogrammproduktes kann das erfindungsgemäße Verfahren ohne weiteres auch bei bestehenden Sensorelementen eingesetzt werden und dort zur Kompensation von Oszillationen bzw. Oszillationsanteilen des Pumpstroms, die durch dynamische Druckschwankungen verursacht werden, genutzt werden. Dynamische Druckschwankungen, die aufgrund eines schwankenden Absolutdrucks des Messgases insbesondere in Folge der Frequenz der Zylinderzündung entstehen, verfälschen das Messsignal eines Sensorelements, insbesondere einer Breitbandlambdasonde, wobei es zu einer Verschiebung des mittleren Pumpstroms (spezifische Mittelwertverschiebung) kommt. Die spezifische Mittelwertverschiebung kann erfindungsgemäß kompensiert werden, indem der Pumpstrom um die Frequenzanteile, die durch die Druckschwankungen verursacht werden, korrigiert wird.

Weitere Merkmale und Vorteile der Erfindung ergeben sich aus der nachfolgenden Beschreibung von Ausführungsbeispielen im Zusammenhang mit den Zeichnungen. Hierbei können die verschiedenen Merkmale jeweils für sich oder in Kombination miteinander verwirklicht sein.

Die Zeichnungen zeigen:
- Figur 1: eine aus dem Stand der Technik bekannte Breitbandlambdasonde und
- Figur 2: eine schematische Darstellung des Sondensignals bei überlagerten Druckpulsen und Gaswechseln (Figur 2A) und ein Fourierspektrum des Sondensignals (Figur 2B).

### Ausführungsformen der Erfindung

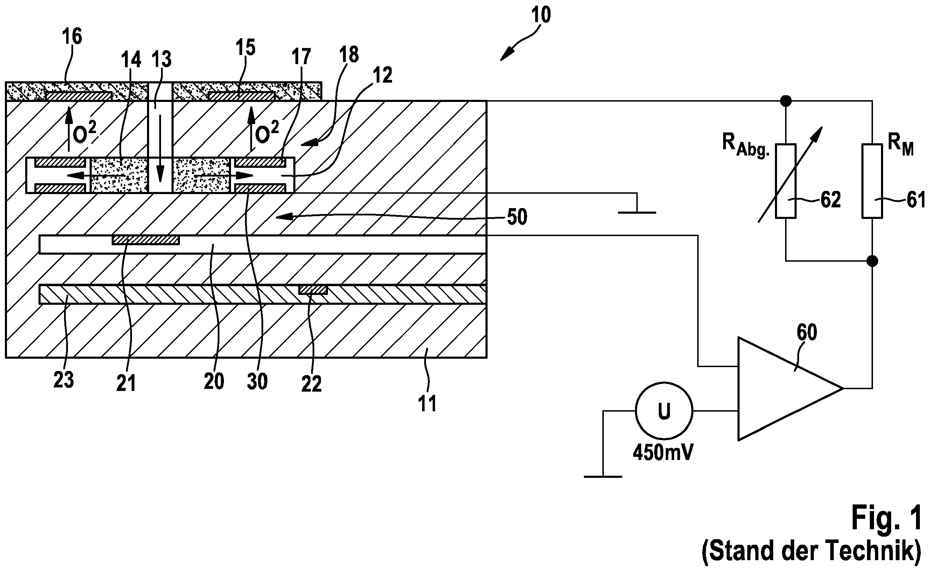

**Figur 1** zeigt eine aus dem Stand der Technik bekannte Breitbandlambdasonde, die zur Bestimmung der Sauerstoffkonzentration in einem Gasgemisch, insbesondere im Abgas einer Brennkraftmaschine, vorgesehen ist. Das Sensorelement umfasst einen planaren Sensorkörper 10, der aus einem Festelektrolyten 11 gebildet ist und in dem ein beispielsweise ringförmiger Hohlraum 12 als Messgasraum ausgebildet ist. Der Hohlraum 12 steht über eine zentrale Öffnung 13 mit dem Abgas in Verbindung. Zwischen der zentralen Öffnung 13 und dem Hohlraum 12 ist eine poröse Diffusionsbarriere 14 angeordnet. Auf der Seite der Öffnung 13 ist eine Außenpumpelektrode 15 angeordnet, die von einer porösen Schutzschicht 16 überdeckt ist. Auf der Seite des Messgasraums 12 ist auf der der Außenpumpelektrode 15 abgewandten Seite eine innere Pumpelektrode 17 angeordnet. Die Außenpumpelektrode 15 und die innere Pumpelektrode 17 umgrenzen eine Pumpzelle 18, die zum Transport von Sauerstoffionen vorgesehen ist.

Innerhalb eines Referenzgasvolumens 20 ist eine Referenzelektrode 21 vorgesehen. Innerhalb des Messgasraums 12 ist eine weitere Elektrode, die Nernstelektrode 30 angeordnet, die ebenso wie die innere Pumpelektrode 17 an einem Nullpotential anliegt. Die Nernstelektrode 30 und die Referenzelektrode 21 bilden zusammen eine Nernst- bzw. Konzentrationszelle 50.

Weiterhin ist unterhalb des Messgasraums 12 und des Referenzgasvolumens 20 ein Heizer 22 in einer Heizerisolationsschicht 23 angeordnet. Der Heizer 22 kann beispielsweise mäanderförmig ausgebildet sein. Der Heizer 22 gewährleistet eine ausreichende Betriebstemperatur des Sensorelements 10.

Eine Mess- und Auswerteschaltung des Sensorelements 10 umfasst einen Differenzverstärker 60, an dessen einem Eingang eine Referenzspannung anliegt, insbesondere 450 mV. Der andere Eingang ist mit der Referenzelektrode 21 verbunden. Weiterhin ist ein Stromteiler, bestehend aus einem Messwiderstand R_{M} 61 und einem Abgleichwiderstand R_{Abg} 62, vorgesehen, der den Ausgang des Differenzverstärkers 60 an die äußere Pumpelektrode 15 führt.

An die Elektroden 15 und 17 der Pumpzelle 18 wird eine Pumpspannung angelegt, mittels der im Messgasraum 12 durch Zu- oder Abpumpen von Sauerstoff ein konstanter Sauerstoffpartialdruck eingestellt wird. Dabei wird die Pumpspannung derart geregelt, dass sich an den Elektroden 30 und 21 der Konzentrationszelle 50 ein konstanter Spannungswert von beispielsweise 450 mV einstellt. Diese Spannung entspricht einem Wert von λ = 1. Nach diesem sogenannten Doppelzellprinzip wird die Luftzahl im Messgasraum 12 durch den Pumpstrom auf einen vorgebbaren Wert geregelt, der vorzugsweise konstant auf λ = 1 gehalten wird. Diese Luftzahl im Messgasraum wird durch die vorgebbare Vergleichsspannung für die Nernstzelle, in diesem Fall 450 mV, vorgegeben.

Das messbare Signal hängt zum einen von der Luftkonzentration im Abgasgemisch, also von der Luftkennzahl des Gasgemisches, ab. Zum anderen wird das Messsignal auch vom Absolutdruck beeinflusst. Problematisch hierbei ist, dass der Absolutdruck des Abgases Schwankungen unterworfen ist. Beispielsweise oszilliert der Absolutdruck mit der Frequenz der Zylinderzündung um mehrere 100 mbar. Mit jedem Druckpuls kommt es zu einer kurzzeitigen starken Erhöhung der in den Messgasraum 12 eintransportierten Mager- oder Fettgaskomponenten des Abgases. Die Mess- und Auswerteschaltung des Sensorelements 10 kann hierauf sehr schnell reagieren, sodass die in der Eintransportphase während des Druckpulses eindringenden zusätzlichen Gaskomponenten, die ein Abweichen von λ = 1 im Messgasraum 12 bewirken, sehr schnell über die Pumpzelle 18 abtransportiert werden. Insgesamt kommt es jedoch zu einer Verschiebung des Messsignals, da in der anschließenden Niederdruckphase weniger Gaskomponenten heraustransportiert werden, als in der Hochdruckphase eintransportiert wurden. Selbst bei einer Glättung dieser Pumpstrom-Oszillationen durch eine geeignete elektronische Filterung kommt es zu einer Verschiebung des mittleren Pumpstroms, der die Messgenauigkeit beeinträchtigt.

Dieses Problem tritt nicht nur bei dem hier im Detail dargestellten Doppelzellerprinzip einer Breitbandlambdasonde auf. Auch Lambdasonden nach dem sogenannten Einzellerprinzip, bei denen die Luftkennzahl λ anhand eines Grenzstroms messbar ist, zeigen eine vergleichbare Mittelwertverschiebung des Grenzstroms in Folge von dynamischen Druckschwankungen. Daher kann das erfindungsgemäße Verfahren auch mit besonderem Vorteil bei dem Betrieb einer Lambdasonde nach dem Einzeller-Prinzip eingesetzt werden.

Erfindungsgemäß werden die durch die dynamischen Druckschwankungen verursachten Oszillationen des Pumpstroms, das heißt also die Frequenzanteile, die durch die dynamischen Druckschwankungen verursacht werden, bei einer Korrektur des Sensorsignals kompensiert, sodass die durch die Druckpulse verursachte Verschiebung des mittleren Pumpstroms bereinigt wird. Hierdurch lässt sich die Messgenauigkeit eines derart betriebenen Sensorelements wesentlich verbessern. Auch Systemtoleranzen können durch diese Maßnahme verkleinert werden. Zur Identifizierung der durch die dynamischen Druckschwankungen verursachten Frequenzanteile der Oszillationen des Pumpstroms werden die Oszillationen vorzugsweise analysiert. Beispielsweise kann hierfür eine Fourier-Frequenz-Analyse durchgeführt werden, bei der die periodischen Signale des Pumpstroms in deren einzelne Frequenzanteile zerlegt werden. Diese Frequenzanteile können beispielsweise von dem gemessenen Pumpstrom abgezogen werden.

In einer anderen besonders bevorzugten Ausführungsform wird in einem Kennfeld für die spezifische Mittelwertverschiebung die aktuelle, betriebspunktabhängige Kombination aus Amplitude, Frequenz und Formfaktor der Druckschwankungen einer sondentypischen Verschiebung des mittleren Pumpstroms zugeordnet, sodass anhand dieses Kennfelds allein durch Messung des aktuellen Pumpstroms und Berücksichtigung des jeweiligen Betriebspunktes die spezifische Mittelwertverschiebung ermittelt und die Lambdamessung entsprechend korrigiert werden kann. In anderen Ausführungsformen kann hierfür ein dynamisches Druckmodell herangezogen werden. Hierbei erfolgt die Bestimmung der Amplitude und des Formfaktors der Druckpulse in Abhängigkeit von dem Betriebspunkt mithilfe des dynamischen Druckmodells. Die Frequenz der Druckpulse ergibt sich aus der Motordrehzahl.

In bevorzugter Weise wird das erfindungsgemäße Verfahren bei Motoren angewendet, deren Zylindergleichstellung bereits aus der Laufruhe oder anderen Verfahren sichergestellt ist. In diesem Fall enthält das Pumpstromsignal im Wesentlichen keine Anteile mit hohen Frequenzen, die durch Lambdaunterschiede erzeugt werden würden. Vielmehr sind in dem hohen Frequenzbereich nur Schwankungen aufgrund der Druckpulse zu erwarten. Allgemein gilt, dass die Schwankungen unterhalb einer bestimmten Frequenzschwelle, beispielsweise unterhalb von 25 Hz, durch tatsächliche Lambdaschwankungen verursacht werden. Oberhalb dieser Schwelle werden die Oszillationen im Prinzip durch Druckpulse verursacht. In einem gewissen Maße treten auch oberhalb von 25 Hz Oszillationen auf, die auf Lambdaschwankungen zurückzuführen sind. Diese Lambdaschwankungen sind durch Zylinderfehlstellungen verursacht. Da sie prinzipiell bei der halben Frequenz der Druckpulse auftreten, können sie im Frequenzspektrum gut von diesen unterschieden werden. Wenn eine Zylindergleichstellung sichergestellt ist, werden die Schwankungen oberhalb der bestimmten Schwelle, z.B. 25 Hz, im Wesentlichen nur durch Druckpulse verursacht. Bei plötzlichen Änderungen der Abgaszusammensetzung wird das Frequenzspektrum der Lambdaschwankungen breiter, so dass die Ausläufer dieses Spektrums auch oberhalb dieser Schwelle einen Beitrag liefern können. Diese Ausläufer sind jedoch flacher als die Beiträge der Druckpulse und können so von diesen unterschieden werden.

Bei vertrimmten Zylindern ist es bevorzugt, die Oszillationen des Pumpstroms durch eine Frequenzanalyse in die Frequenzanteile zu zerlegen, falls die Lambdaschwankungen mit den Druckpulsen zu sehr überlappen. Da die Lambdaschwankungen aufgrund der Zylindervertrimmung höchstens die halbe Frequenz wie die Druckpulse haben, ist es ohne weiteres möglich, die Frequenzanteile beispielsweise in einem Fourier-Spektrum voneinander zu unterscheiden.

Vorzugsweise wird die Fourier-Amplitude, die insbesondere der doppelten Motordrehzahl zuzuordnen ist, ausgewertet, da sie zuverlässig den Druckschwankungen zugeordnet werden kann.

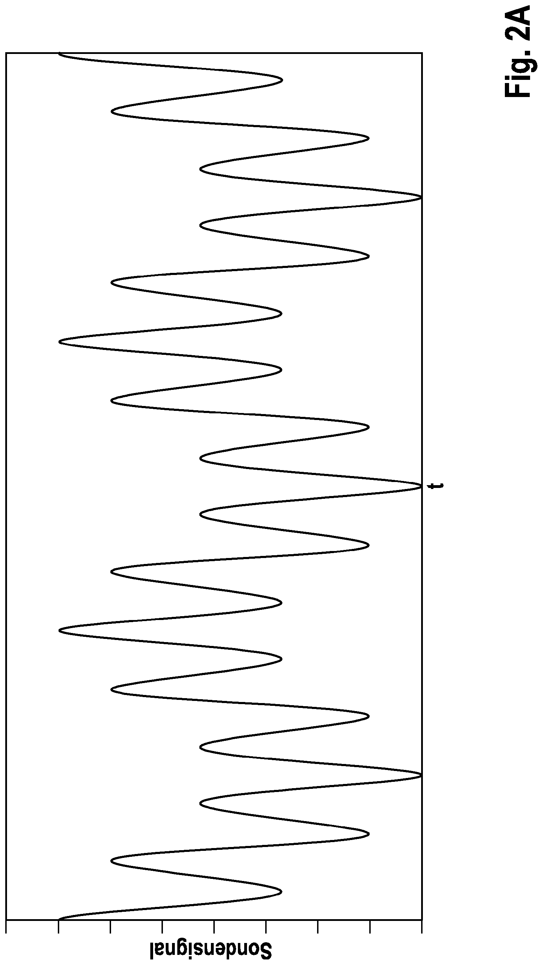

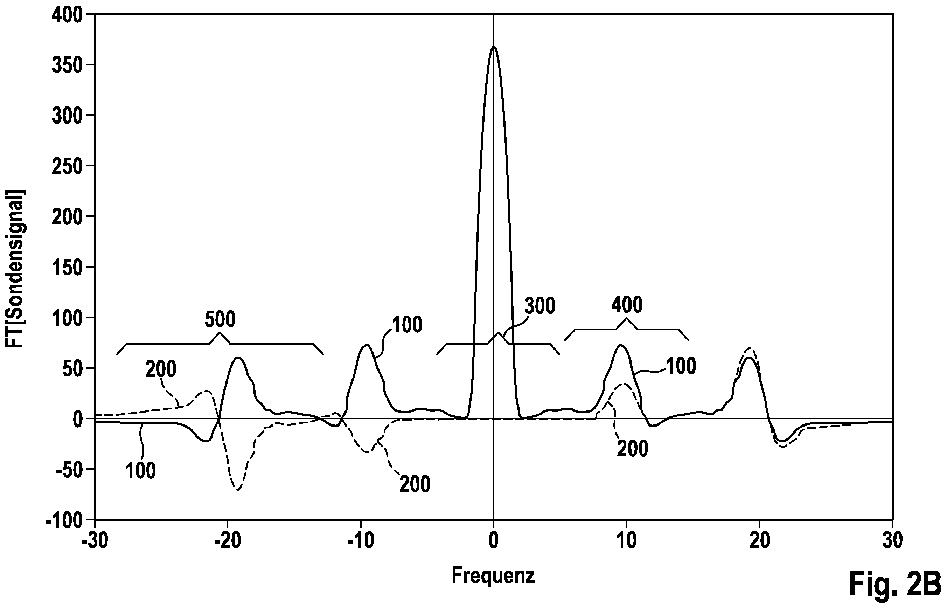

**Figur 2A** zeigt in schematischer Weise den zeitlichen Verlauf des Sondensignals bei überlagerten Druckpulsen und Gaswechseln (Lambdawechsel). Aus **Figur 2B** geht die dazugehörige Fourier-Zerlegung (FT[Sondensignal]) hervor. Der mit 100 bezeichnete Verlauf des Signals in Figur 2B zeigt den Realteil (FT[Ip]) des Sondensignals. Der mit 200 bezeichnete Verlauf zeigt den Imaginärteil (FT[Ip]) des Sondensignals. Der mit 300 bezeichnete Bereich kennzeichnet den statischen Pumpstrom Ip. Die Signale im Fourier-Spektrum oberhalb des statischen Ip 300 sind einem Gaswechsel bzw. Lambdawechsel zuzuordnen, hier mit 400 bezeichnet. Signale im Fourier-Spektrum oberhalb dieser Frequenzen sind Druckpulsen zuzuordnen, hier mit 500 bezeichnet. Der Einfluss der Druckpulse kann somit von dem eigentlichen Lambdasignal separiert werden. Allerdings sollte hierzu auch die Verschiebung des mittleren Pumpstroms, die einen zusätzlichen Beitrag bei der Frequenz 0 Hz verursacht, korrigiert werden.

## Patentansprüche

1. Verfahren zum Betreiben einer Lambdasonde (10), zur Bestimmung der Konzentration einer Gaskomponente eines Gasgemisches, bei dem die Gaskomponente durch Anlegen einer Pumpspannung aus einem Messgasraum (12) entfernt wird und hieraus auf die Konzentration der Gaskomponente im Gasgemisch geschlossen wird, **dadurch gekennzeichnet, dass** durch dynamische Druckschwankungen des Absolutdrucks des Gasgemisches verursachte Oszillationen des Pumpstroms für eine Korrektur des Sensorsignals berücksichtigt werden.

2. Verfahren nach Anspruch 1, **dadurch gekennzeichnet, dass** die Oszillationen des Pumpstroms zur Identifizierung derjenigen Frequenzanteile, die durch dynamische Druckschwankungen verursacht sind, analysiert werden und das Sensorsignal um die Frequenzanteile der dynamischen Druckschwankungen korrigiert wird.

3. Verfahren nach Anspruch 2, **dadurch gekennzeichnet, dass** die Analyse der Oszillationen durch eine Frequenz-Analyse, insbesondere eine Fourier-Frequenz-Analyse, durchgeführt wird.

4. Verfahren nach einem der vorhergehenden Ansprüche, **dadurch gekennzeichnet, dass** die Frequenzanteile, die durch dynamische Druckschwankungen verursacht sind, von den Oszillationen des Pumpstroms abgezogen werden.

5. Verfahren nach einem der vorhergehenden Ansprüche, **dadurch gekennzeichnet, dass** wenigstens einer Größe, die die Frequenzanteile, die durch dynamische Druckschwankungen verursacht sind, charakterisiert, eine sensorelementtypische Mittelwertverschiebung des Pumpstroms zugeordnet wird und anhand dieser Zuordnung die Korrektur des Sensorsignals vorgenommen wird, wobei vorzugsweise die Zuordnung in einem Kennfeld hinterlegt wird.

6. Verfahren nach einem der vorhergehenden Ansprüche, **dadurch gekennzeichnet, dass** für die Korrektur des Pumpstroms nur diejenigen durch dynamische Druckschwankungen verursachten Frequenzanteile berücksichtigt werden, deren Frequenzen oberhalb einer vorgebbaren Schwelle liegen.

7. Verfahren nach einem der vorhergehenden Ansprüche, **dadurch gekennzeichnet, dass** bei der Analyse der Oszillationen niedrige Frequenzen, insbesondere Frequenzen unterhalb von 25 Hz, und hohe Frequenzen, insbesondere Frequenzen oberhalb von 25 Hz, voneinander unterschieden werden.

8. Verfahren nach Anspruch 7, **dadurch gekennzeichnet, dass** das Signal des Sensors durch einen Hochpassfilter geleitet und die gleichgerichtete und gemittelte Amplitude des Signals für eine Korrektur des Sensorsignals herangezogen wird.

9. Computerprogramm, das alle Schritte eines Verfahrens nach einem der Ansprüche 1 bis 8 ausführt, wenn es auf einem Rechengerät oder einem Steuergerät abläuft.

10. Computerprogrammprodukt mit Programmcode, der auf einem maschinenlesbaren Träger gespeichert ist, zur Durchführung eines Verfahrens nach einem der Ansprüche 1 bis 8, wenn das Programm auf einem Computer oder einem Steuergerät ausgeführt wird.

## Claims

1. Method for operating a lambda probe (10) for determining the concentration of a gas component of a gas mixture, in which the gas component is removed from a measurement gas space (12) by applying a pump voltage and this is used to infer the concentration of the gas component in the gas mixture, **characterized in that** oscillations of the pump current which are caused by dynamic pressure fluctuations of the absolute pressure of the gas mixture are taken into account for the purpose of correcting the sensor signal.

2. Method according to Claim 1, **characterized in that** the oscillations of the pump current are analysed for the purpose of identifying those frequency components which are caused by dynamic pressure fluctuations, and the sensor signal is corrected with the frequency components of the dynamic pressure fluctuations.

3. Method according to Claim 2, **characterized in that** the oscillations are analysed by means of a frequency analysis, in particular a Fourier frequency analysis.

4. Method according to one of the preceding claims, **characterized in that** the frequency components which are caused by dynamic pressure fluctuations are subtracted from the oscillations of the pump current.

5. Method according to one of the preceding claims, **characterized in that** a sensor-element-typical mean value shift of the pump current is assigned to at least one variable which characterizes the frequency components caused by dynamic pressure fluctuations and the sensor signal is corrected on the basis of this assignment, the assignment preferably being stored in a family of characteristics.

6. Method according to one of the preceding claims, **characterized in that** only those frequency components which are caused by dynamic pressure fluctuations and the frequencies of which are above a predefinable threshold are taken into account for the purpose of correcting the pump current.

7. Method according to one of the preceding claims, **characterized in that** low frequencies, in particular frequencies below 25 Hz, and high frequencies, in particular frequencies above 25 Hz, are distinguished from one another when analysing the oscillations.

8. Method according to Claim 7, **characterized in that** the signal from the sensor is passed through a high-pass filter and the rectified and averaged amplitude of the signal is used to correct the sensor signal.

9. Computer program which carries out all steps of a method according to one of Claims 1 to 8 when it runs on a computing device or a control device.

10. Computer program product having program code which is stored on a machine-readable medium for carrying out a method according to one of Claims 1 to 8 when the program is executed on a computer or a control device.

## Revendications

1. Procédé pour faire fonctionner une sonde lambda (10) en vue de déterminer la concentration d'une composante gazeuse d'un mélange gazeux, avec lequel la composante gazeuse est retirée d'un espace de gaz de mesure (12) en appliquant une tension de pompage et à partir de là est déduite la concentration de la composante gazeuse dans le mélange gazeux, **caractérisé en ce que** les oscillations du courant de pompage provoquées par les fluctuations de pression dynamiques de la pression absolue du mélange gazeux sont prises en compte pour une correction du signal de capteur.

2. Procédé selon la revendication 1, **caractérisé en ce que** les oscillations du courant de pompage sont analysées en vue d'identifier les composantes de fréquence qui sont provoquées par les fluctuations de pression dynamiques et le signal de capteur est corrigé des composantes de fréquence des fluctuations de pression dynamiques.

3. Procédé selon la revendication 2, **caractérisé en ce que** l'analyse des oscillations est effectuée par une analyse de la fréquence, notamment par une analyse de la fréquence de Fourier.

4. Procédé selon l'une des revendications précédentes, **caractérisé en ce que** les composantes de fréquence qui sont provoquées par les fluctuations de pression dynamiques sont déduites des oscillations du courant de pompage.

5. Procédé selon l'une des revendications précédentes, **caractérisé en ce qu'**un décalage de la valeur moyenne du courant de pompage typique à l'élément capteur est associé à au moins une grandeur qui caractérise les composantes de fréquence qui sont provoquées par les fluctuations de pression dynamiques et la correction du signal de capteur est effectuée au moyen de cette association, l'association étant de préférence enregistrée dans un diagramme caractéristique.

6. Procédé selon l'une des revendications précédentes, **caractérisé en ce que** seules sont prises en compte pour la correction du courant de pompage les composantes de fréquence qui sont provoquées par les fluctuations de pression dynamiques dont les fréquences sont supérieures à un seuil pouvant être prédéfini.

7. Procédé selon l'une des revendications précédentes, **caractérisé en ce que** les fréquences basses, notamment les fréquences inférieures à 25 Hz, et les fréquences hautes, notamment les fréquences supérieures à 25 Hz, sont différenciées les unes des autres lors de l'analyse des oscillations.

8. Procédé selon la revendication 7, **caractérisé en ce que** le signal du capteur est acheminé à travers un filtre passe-haut et l'amplitude redressée et moyenne du signal est utilisée pour une correction du signal de capteur.

9. Programme informatique qui met en oeuvre toutes les étapes d'un procédé selon l'une des revendications 1 à 8 lorsqu'il est exécuté sur un ordinateur ou un contrôleur.

10. Produit de programme informatique comprenant un code de programme qui est enregistré sur un support lisible par machine, destiné à mettre en oeuvre un procédé selon l'une des revendications 1 à 8 lorsque le programme est exécuté sur un ordinateur ou un contrôleur.
